# EUROPEAN PATENT APPLICATION

(11) **EP 3 868 722 A1**
(43) Date of publication of application: **25.08.2021**
(21) Application number: 20158462.0
(22) Date of filing: 20.02.2020
(51) Int. Cl.: C02F 11/123, B30B 9/24

(54) **DEWATERING ASSEMBLY**

(71) Applicant: METSO SWEDEN AB, 231 22 Trelleborg (SE)
(72) Inventor: Grönvall, Lars, 231 31 Trelleborg (SE); Hällevall, Niclas, 223 52 Lund (SE)
(74) Representative: Hoffmann Eitle

(57) **Abstract**

A dewatering assembly (1) comprises a frame (2); a pair of dewatering rollers rotatably supported by the frame (2) with their curved outer peripheral surfaces facing each other so as to form a dewatering gap there between; an endless filter belt (11, 12) arranged to travel through the dewatering gap in a substantially vertical direction upon rotation of the dewatering rollers, wherein the endless filter belt (11, 12) forms an engagement zone (30) with one of the dewatering rollers in which successive portions of the endless filter belt (11, 12) engage with and disengage from successive portions of the curved outer peripheral surface of the dewatering roller; and a feed hopper (16) arranged above the dewatering gap for feeding a slurry into the dewatering gap. The feed hopper (16) comprises a sealing wing (38) covering the one of the dewatering rollers (5, 6), and the filter belt (11, 12) engaged therewith, in at least a part of the engagement zone (30).

## Description

### Background

The present invention relates to an assembly for dewatering slurry containing fine particulate matter such as a slurry of mine tailings.

Tailings are the materials left over after the process of separating the valuable fraction from the uneconomic fraction (gangue) of an ore.

For the extraction of minerals from ore, the rock containing the ore is pulverized, and the sought-after material is then concentrated by chemical reactions. The extraction of minerals from ore requires comminution, i.e., grinding the ore into fine particles to facilitate extraction of the target element(s). Because of this comminution, tailings are usually produced from the mill in the form of a slurry which is a mixture of water and fine particles, ranging from the size of a grain of sand to a few micrometres. Mine tailings may be highly toxic and potentially radioactive.

### Prior art

The traditional impoundment where a dam retains pumped slurried tailings with solids contents typically in the range of 30-40% remains the most common method for storing the tailings from milling operations.

However, in view of the various problems associated with such tailings dams, the *in situ* dewatering of such problem material is highly desirable, and there are a growing number of operations whereby the tailings are dewatered and placed in the tailings storage facility with less accompanying water. By centrifuging or filtration, mine tailings can be brought to a solid-like state, i.e. a consistency that is potentially transportable by truck or conveyor. Filtering the tailings removes the most water from the tailings for recycle when compared with other tailings technologies.

In general terms, filtering can take place using pressure or vacuum force. Drums, horizontally or vertically stacked plates and horizontal belts are the most common filtration plant configurations.

As far as mine tailings are concerned, filter pressing has been proven to be a viable tailings management alternative for production rates of up to 30,000 tons per day. Today's facilities operate at production rates in the order of 100,000 tons per day though. One prior approach to handle increasing production rates has been to increase the size of plate and frame filter presses (from 2 x 2 and 2.5 x 2.5m to 4 x 4 and 5 x 5m plates. However, there remains a need to achieving efficient filtration of mine tailings in the order of 50,000 to 100,000 tons per day or more.

### Summary of the invention

The object of the present invention is to achieve an efficient dewatering of a slurry containing particulate material.

To achieve this object, the present invention provides a dewatering assembly as recited in claim 1.

The dewatering assembly comprises: a frame; a pair of dewatering rollers rotatably supported with their curved outer peripheral surfaces facing each other so as to form a dewatering gap there between; an endless filter belt arranged to travel through the dewatering gap in a substantially vertical direction upon rotation of the dewatering rollers, wherein the endless filter belt forms an engagement zone with one of the dewatering rollers in which successive portions of the endless filter belt engage with and disengage from successive portions of the curved outer peripheral surface of the dewatering roller; and a feed hopper arranged above the dewatering gap for feeding a slurry into the dewatering gap. The feed hopper comprises a sealing wing covering the one of the dewatering rollers, and the filter belt engaged therewith, in at least a part of the engagement zone.

In the assembly of the invention, the slurry to be dewatered is supplied into the dewatering gap formed between the dewatering rollers. The slurry enters the gap from above, so that vertical material transport is achieved and assisted by gravity. The feeding of the slurry is performed by means of a feed hopper arranged above the dewatering gap and comprising a sealing wing covering the dewatering roller, and the filter belt engaged therewith, in at least a part of the engagement zone formed by the endless filter belt and the dewatering roller.

The sealing of the engagement zone provided by the sealing wing of the feed hopper allows for a pressurized slurry feed which reduces dewatering time. The vertical material transport through the assembly maximizes gravity benefits on throughput and filter water separation.

In one application example, the dewatering assembly may be used to dewater a slurry of mine tailings in the order of 50,000 to 100,000 tons per day or more. The claimed assembly could, however, also be used for dewatering other types of slurry including particulate material, e.g. coal slurry.

Further optional features of the dewatering assembly are set forth in the dependent claims.

In embodiments, the dewatering assembly comprises a pair of endless filter belts arranged to travel through the dewatering gap in a substantially vertical direction upon rotation of the dewatering rollers, wherein each endless filter belt forms an engagement zone with one of the dewatering rollers in which successive portions of the endless filter belt engage with and disengage from successive portions of the curved outer peripheral surface of the dewatering roller. In this case, the feed hopper is arranged above the dewatering gap for feeding the slurry into the dewatering gap and between the filter belts. The feed hopper comprises sealing wings covering the dewatering rollers, and the filter belts engaged therewith, in at least parts of the engagement zones.

Depending on the type of slurry, using a pair of endless filter belts rather than only one endless filter belt may result in an even more efficient dewatering. Also, the vertical travelling direction of the filter belts results in a certain self-alignment of the filter belts.

The or each sealing wing of the feed hopper may have a curved shape corresponding to the shape of the curved outer periphery of the associated dewatering roller.

The surface of the or each sealing wing facing the associated dewatering roller may be clad with hard-wearing elements, e.g. ceramic elements. Such hard-wearing elements provide for a low friction and high wear resistance.

The feed hopper may be preloaded against the dewatering rollers. The pre-loading force provides for a close contact between the feed hopper, or more precisely the sealing wing(s) thereof, and the filter belt(s) and dewatering rollers. Preferably, the feed hopper is supported to the frame of the assembly so that the pressure for pre-loading the feed hopper in a downward direction can be adjusted, wherein a need for adjustment could e.g. result from wear of the aforementioned hard-wearing elements.

The dewatering assembly may further comprise a feed pipe upstream of the feed hopper to supply the slurry to the feed hopper.

Also, the stiffness of at least one side wall of the feed hopper may be reduced in a bottom portion of the side wall adjacent to the dewatering gap. The stiffness may be reduced e.g. by forming an indentation in the respective side wall. Such an indentation can be said to constitute a gap seal adapter insofar as it facilitates the adaptation of the shape of the feed hopper, particularly the sealing wing(s) thereof, to the shape of the dewatering rollers in the area upstream of the dewatering gap, thereby adding to the sealing efficiency of the wings.

Drainage grooves may be formed in the curved outer peripheral surface of at least one of the dewatering rollers, e.g. in a grid pattern, to drain the filtrate away from the filter belt(s).

The dimensions of the drainage grooves, specifically the radial depth and the resulting volume thereof, should be set so as to allow for a sufficient dewatering of the slurry, also to reduce the risk of a possible leakage in the area of the sealing wing(s) as follows: Due to the fact that the slurry is supplied to the interior of the feed hopper under pressure, slurry might tend to get into any small gaps occurring between a sealing wing and the filter belt and to move, against the travelling direction of the filter belt, towards the outer edge of the sealing wing where atmospheric pressure prevails. During this pressure-driven progress of the slurry, the slurry will be dewatered through the filter belt, and the pressure of the slurry will decline. The dewatering grooves, and the length of the wings along the circumference of the dewatering rollers, should be dimensioned so that the pressure of the slurry declines to atmospheric pressure before the slurry has reached the outer edge of the sealing wing; otherwise there will be a leak. To achieve this pressure reduction, the area of possible gaps between opposing surfaces of the sealing wing and the filter belt should be significantly smaller than an effective area of the filter belt and the drainage grooves in the dewatering roller. This promotes the travelling of the filtrate through the filter belt also in the area of the sealing wing(s), and thereby prevents leakage of the slurry getting between a sealing wing and the filter belt.

In embodiments, at least one of the dewatering rollers comprises a resilient, elastically deformable tire which has the ability to be compressed and to regain its shape. The aforementioned drainage grooves are then formed in the outer peripheral surface of the tire. The tire could be filled with gas, gel, foam etc., and means could be provided to adjust and control the pressure within the tire. The use of such resilient tires will result in an extended dewatering area between the rollers. Further advantages include even pressure throughout the length of the roller, friction, and pressure regulation.

A disk-shaped flange may be provided to at least one of the front faces of at least one of the dewatering rollers of the pair of dewatering rollers, the flange having a diameter exceeding a diameter of the curved outer peripheral surface of the one of the dewatering rollers. The flange seals the dewatering gap towards the front and rear of the assembly. The flange may also hold the filter belt in place.

In addition to the said first pair of dewatering rollers, the dewatering assembly may comprise at least one further pair of dewatering rollers disposed below the first pair of dewatering rollers. The further dewatering rollers are also rotatably supported with their curved outer peripheral surfaces facing each other so as to form a further dewatering gap there between, and the endless filter belt(s) is/are arranged to travel also through the further dewatering gap in a substantially vertical direction. In an alternative, there could be several filter belts in a vertical dimension. The use of several pairs of dewatering rollers results in a progressive dewatering of the slurry.

If several pairs of dewatering rollers are used, the dewatering rollers of one pair of dewatering rollers may be larger in diameter than the dewatering rollers of at least one further pair of dewatering rollers arranged downstream in the travelling direction of the filter belt(s) through the assembly. The reverse order is possible, too, i.e. the dewatering rollers of one pair of dewatering rollers may be smaller in diameter than the dewatering rollers of at least one further pair of dewatering rollers arranged downstream in the travelling direction of the filter belt(s) through the assembly.

Alternatively or in addition, the dewatering gap formed by one pair of dewatering rollers may be larger than the dewatering gap formed by at least one further pair of dewatering rollers arranged downstream in the travelling direction of the filter belt(s) through the assembly, so that a progressively larger pressing force is applied to the slurry. Also in this connection, the reverse order is in principle possible, i.e. the dewatering gap formed by one pair of dewatering rollers may be smaller than the dewatering gap formed by at least one further pair of dewatering rollers arranged downstream in the travelling direction of the filter belt(s) through the assembly, so that a progressively smaller pressing force is applied to the slurry.

The dewatering assembly may further comprise means for supporting the endless filter belt(s) in an area between one pair of dewatering rollers and a further pair of dewatering rollers arranged downstream in the travelling direction of the filter belt(s) through the assembly. These intermediate supporting means make sure that the filter belt(s) is/are properly supported also during their travel between the individual dewatering gaps.

At least one of the dewatering rollers may be supported by a carrier structure which is in turn hingedly or pivotably supported to the frame.

Means may be provided to support the dewatering rollers of at least one of the pairs of dewatering rollers relative to each other. These means could e.g. be provided in the form of pistons such as hydraulically operated pistons, to define the distance between the opposing surfaces of the dewatering rollers of the pair and thereby also the size of the dewatering gap there between.

The or each endless filter belt may comprise a web of filter cloth in the shape of a belt comprising two longitudinal edges and two surfaces facing away from each other, and a flanged seal at one or both of the longitudinal edges of the web which are shaped to seal against the sealing wing of the feed hopper. The or each endless filter belt may further comprise at least one drive and sealing segment extending on one surface of the web of filter cloth in a longitudinal direction thereof. If so, the associated dewatering roller comprises a circumferential recess for engaging with the drive and sealing segment in the respective engagement zone.

The dewatering assembly may further comprise a filter water collection tray below at least one, preferably below each dewatering roller, wherein the water from filter water collection trays of at least two dewatering rollers is optionally discharged via a common dewatering chute.

Finally, depending on the material, it may be preferable to supply the slurry under pressure. Therefore, the dewatering assembly may further comprise means for providing a pressurized slurry to the feed hopper, wherein the feed hopper is configured to feed the pressurized slurry into the dewatering gap.

To provide for the pressurized slurry feed, different configurations relating to the feed hopper are considered. In one alternative, a pump creates the pressure, and the function of the feed hopper is mainly to provide for a rectangular shape in the area where the feed hopper is adjacent to the dewatering rollers. In another alternative, a larger vessel, container or tank associated with the feed hopper allows gravity to assist in creating the pressure.

The present invention also provides a filter belt for use as an endless filter belt in a dewatering assembly as described herein. The filter belt comprises a web of filter cloth in the shape of a belt comprising two longitudinal edges and two surfaces facing away from each other. The filter belt further comprises a flanged seal at one or both of the longitudinal edges thereof which are shaped to seal against the sealing wing of the feed hopper of the assembly.

Optionally, the filter belt further comprises at least one drive and sealing segment extending on one surface of the web of filter cloth in a longitudinal direction thereof and configured for engagement with a circumferential recess in the associated dewatering roller in the respective engagement zone. The areas of the web between the individual drive and sealing segments allow filtrate to pass through and therefore together constitute the effective area of the filter belt.

### Brief description of the drawings

Figures 1a and 1b are schematic illustrations showing main operational features of embodiments of a dewatering assembly according to the present invention.
Figures 2 and 3 show an embodiment with three pairs of dewatering rollers in more detail.
Figure 4a is an isolated perspective view of a feed hopper of the embodiment of Figures 2 and 3, and Figure 4b is a longitudinal sectional view of the feed hopper.
Figure 5 is a detailed view of a sealing zone of the embodiment of Figures 2 and 3 including the feed hopper.
Figure 6 illustrates the feed hopper mounted within the assembly of Figures 2 and 3.
Figure 7 is an isolated view of a dewatering roller of the embodiment of Figures 2 and 3.
Figure 8 is a partial view of the assembly of Figures 2 and 3.
Figure 9 is a partially cutaway perspective view of the embodiment of Figures 2 and 3.
Figure 10 shows a detail of a discharge device of the embodiment of Figures 2 and 3.
Figure 11 is a cross sectional view of a filter belt for use in a dewatering assembly according to the present invention, including the embodiment of Figures 2 and 3.

### Detailed description of embodiments

An embodiment of a dewatering assembly according to the invention will now be described with reference to the drawings.

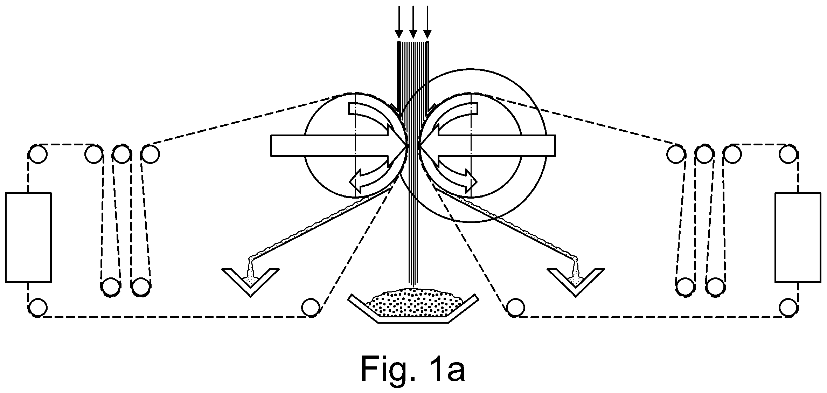

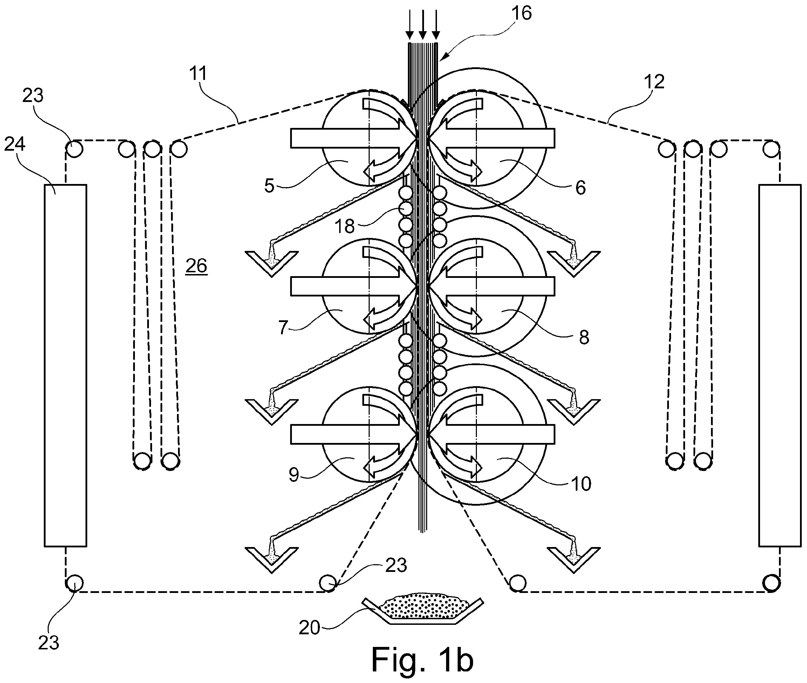

First of all, to provide an overview of essential aspects of the invention, main operational features of embodiments of dewatering assemblies according to the present invention are schematically illustrated in Figures 1a and 1b. Figure 1a shows an embodiment with only one pair of dewatering rollers, whereas Figure 1b shows an embodiment with three pairs of dewatering rollers.

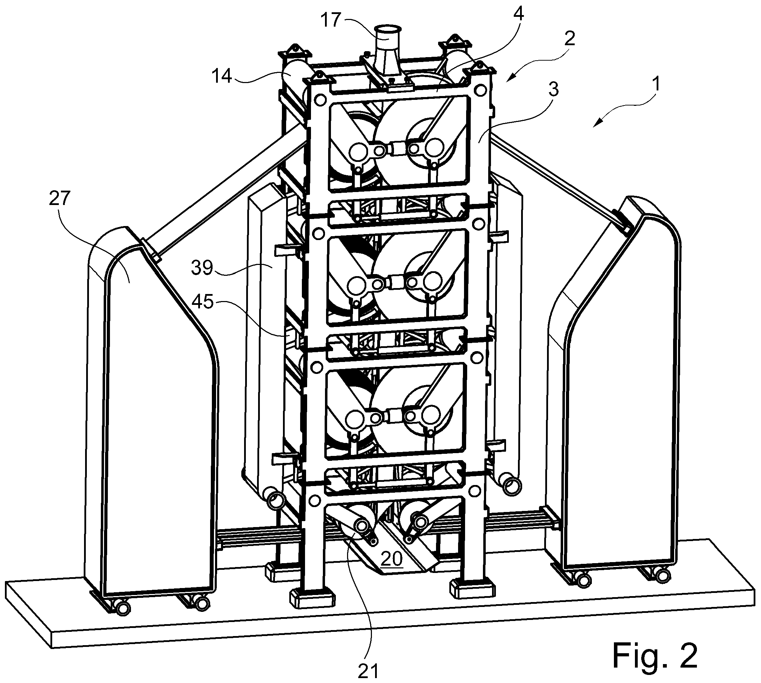

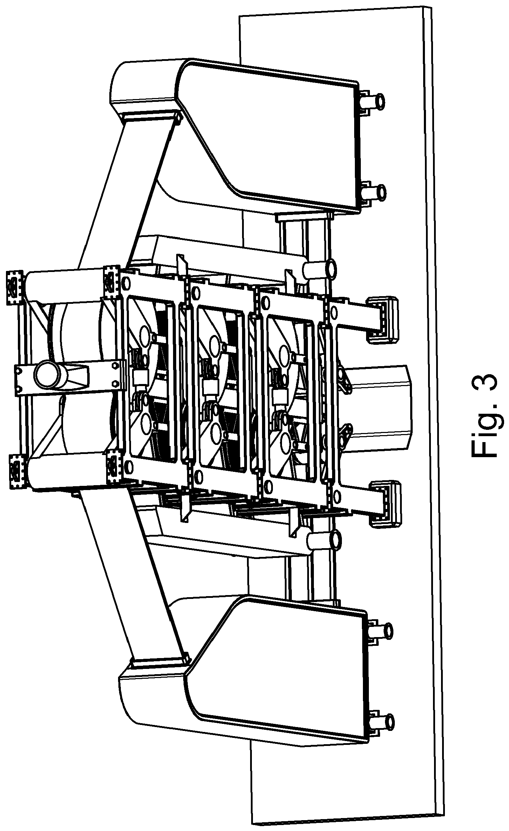

Figures 2 and 3 show an embodiment with three pairs of dewatering rollers in more detail in a perspective front view and a perspective top view respectively.

While the following description mainly refers to embodiments with several pairs of dewatering rollers such as the one shown in Figures 2 and 3, the explanations given below shall equally apply to embodiments with only one pair of dewatering rollers.

With reference to Figures 2 and 3, a dewatering assembly 1 of the present invention includes a frame structure 2 of vertical posts 3 and horizontal beams 4, and a first pair of dewatering rollers 5, 6 which are rotatably supported by the frame structure 2. Specifically, U-shaped carrier structures are provided to support the dewatering rollers 5, 6; these structures will be described in more detail further below.

The curved outer peripheral surfaces of the dewatering rollers of the first pair are facing each other so as to form a dewatering gap there between. In the dewatering gap, a pair of endless filter belts 11, 12 are arranged opposite each other. Upon rotation of the dewatering rollers 5, 6, the filter belts 11, 12 travel through the dewatering gap in a substantially vertical direction. The dewatering rollers of the pair rotate in opposite directions so that the filter belts move through the gap in the same direction. Specifically, the dewatering roller illustrated on the left side in Figure 2 rotates in the clockwise direction in the drawing whereas the dewatering roller illustrated on the right side in Figure 2 rotates in the counter-clockwise direction in the drawing. Both filter belt are thereby made to travel downwards through the dewatering gap. Provided that both dewatering rollers of the pair have the same diameter and are rotated at the same speed (though in opposite rotational directions), the filter belts travel at the same speed, too.

A feed hopper 16, which will be described in more detail further below, is arranged above the dewatering gap for feeding a slurry, such as slurried mine tailings, into the dewatering gap and between the filter belts.

The slurry is supplied to the feed hopper via a feed pipe 17. In view of the arrangement of the feed hopper 16 above the dewatering gap, gravity contributes to the feed of the slurry into the gap and between the filter belts 11, 12. Depending on the circumstances, the slurry may be supplied via the feed pipe 17 under pressure, i.e. as a pressurized slurry. The pressurized slurry has an impact on the first pair of dewatering rollers and engages with the filter belt in a pressurized state.

As the filter belts pass the dewatering gap with the slurry sandwiched there between, a high pressing force is exerted onto the slurry by the dewatering rollers 5, 6 which makes the water contained in the slurry permeate the filter belts 11, 12 while the solid particles in the slurry are retained by the filter belts and continue travelling downwards through the assembly on the surfaces of the filter belts.

In this embodiment, two further pairs of dewatering rollers 7, 8 and 9, 10 are disposed below the first pair of dewatering rollers 5, 6, i.e. downstream of the first pair as seen in the travelling direction of the filter belts. Similar as the dewatering rollers of the first pair, the dewatering rollers of the second and third pairs are also rotatably supported with their curved outer peripheral surfaces facing each other so as to form further dewatering gaps there between. The endless filter belts also pass through the further dewatering gaps in a substantially vertical direction, resulting in a progressive dewatering of the slurry.

Depending on boundary conditions such as the moisture content of the slurry, the number of pairs of dewatering rollers can be changed to fit any application. The pressure between the dewatering rollers and also the radii of the dewatering rollers have an impact.

In the illustrated embodiment, the three pairs of rollers all have the same diameter, but the rollers could also have different diameters, specifically so that the first pair of dewatering rollers has the largest diameter and the rollers of the downstream pairs have continuously smaller diameters.

In absolute terms, the diameter of the dewatering rollers of the first pair could be e.g. about 3m, and the width of these rollers could equally be 3m.

In order to provide for the necessary rotation of the dewatering rollers, at least one dewatering roller and preferably all of the dewatering rollers are equipped with means (not shown) for directly driving each dewatering roller for rotation. By means of these direct driving means, the individual pairs of dewatering rollers can also be rotated at different speeds if desired. The driving means of the individual rollers could be synchronized.

In the illustrated embodiment, the dewatering rollers *per se* are not permeable. Their surfaces may be made from any suitable material including metal, rubber or polymer material such as e.g. polypropylene (PP).

In alternative embodiments, the peripheral surfaces of the dewatering rollers could be permeable, e.g. provided with through holes, in which case the filtrate would penetrate the peripheral surfaces and end up in a hollow interior of the dewatering rollers.

For the filter belts, a filter cloth is used which has a pore size adapted to the size of the particles which are to be separated from the water in the slurry.

The dewatering gaps formed by the pairs of dewatering rollers become continuously smaller in the travelling direction of the slurry through the assembly, i.e. the space available for the filter belts and the slurry to pass through the gaps becomes successively less from pair to pair. As a result, the pressing force exerted upon the slurry sandwiched between the filter belts is increased from pair to pair.

Figure 1b also confirms that the assembly comprises means in the form of groups of small rollers 18 for supporting the endless filter belts also in areas between the individual pairs of dewatering rollers, to prevent the filter belts from bulging out away from each other in these intermediate areas and to make sure that also in these intermediate areas, the filtering belts still exert a certain compressional force onto the slurry. The rollers 18 are not associated with any driving means but rotate due to their contact with the filter belts.

After passing the dewatering gap of the last pair of dewatering rollers 9, 10, the endless filter belts 11, 12 pass a pair of discharge rollers 21 and then open up, and the dewatered matter drops onto a discharge device which in the embodiment includes a belt conveyor 20 for transporting the dewatered matter to dry stacking.

By means of an arrangement of guide rollers 23, each of the filter belts 11, 12 is further guided in a respective loop so as to return to the entrance to the first dewatering gap. During its return travel, each filter belt passes a respective cleaning unit 24 in which it is cleaned continuously for maximum filtering efficiency.

After the cleaning unit 24, the filter belt passes a filter cloth cassette 26 including further guide rollers and tensioning rollers. The cassette 26 can be used to ensure that the optimum tension is always applied to the moving filter belt. Also, due to the cassette solution, the operating length of the filter belts could be adapted as needed.

In the embodiment of Figure 2, cassette and cleaning stations or towers 27 are provided at both sides of the assembly, each accommodating the guide rollers, cassette and cleaning unit associated with one of the two belt filters. In theory, only one cleaning station or cleaning tower could be provided for cleaning and tensioning both filter belts.

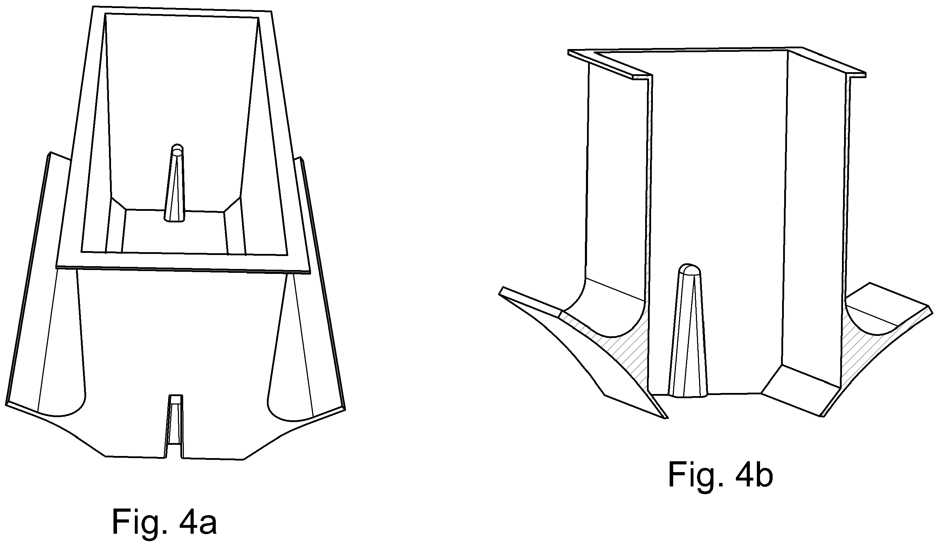

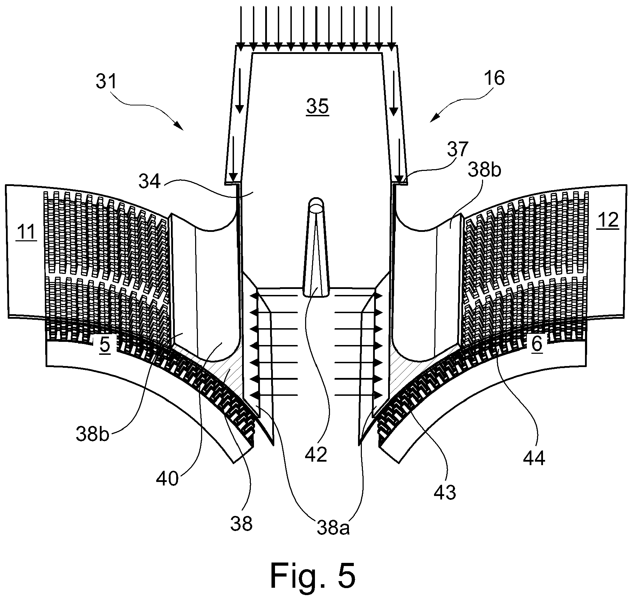

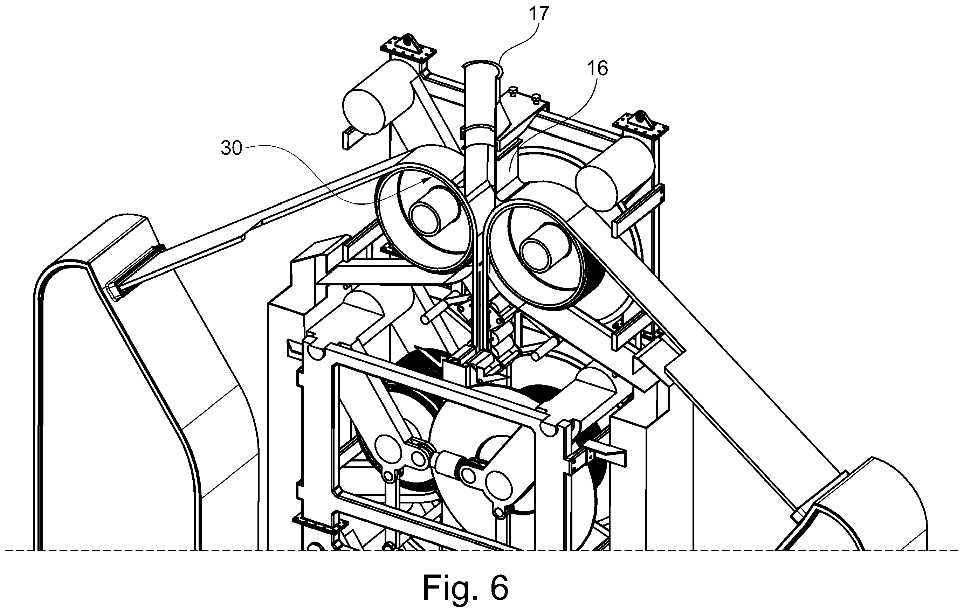

The configuration of the feed hopper 16 will now be described with reference to Figures 4 to 6. Figure 4a is an isolated perspective view of the feed hopper, and Figure 4b is a longitudinal sectional view thereof. Figure 5 is a detailed view, partially cut away, of the relative position of the feed hopper, dewatering rollers and filter belts. Figure 6 is a sectional view of an upper part of the dewatering assembly and illustrates the feed hopper mounted within the assembly relative to the first pair of dewatering rollers and the filter belts guided thereby (all shown in longitudinal section).

Figure 6 shows how each endless filter belt 11, 12 forms an engagement zone 30 with one of the dewatering rollers 5, 6 in which successive portions of the endless filter belt engage with and disengage from successive portions of the curved outer peripheral surface of the dewatering roller.

Referring to Figures 4a, 4b and 5, the feed hopper 16 comprises a duct portion 31 which in this embodiment has an open top and bottom and four vertical side walls arranged at right angles to each other, i.e. two long side walls 34 and two short side walls 35. The longer side walls 34 extend parallel to the dewatering gap, and the shorter side walls 35 extend perpendicular thereto. In this embodiment, the four side walls 34, 35 provide the duct portion 31 with an essentially rectangular outer shape to provide for a proper sealing of the feed hopper 16 against the dewatering rollers as explained in more detail below. In the embodiment, the internal cross section of the duct portion 31 is rectangular, too. In an alternative, the internal cross section could have another geometrical shape such as a circular or oval shape; such a shape might facilitate an even distribution of the slurry to the dewatering rollers.

The open top and bottom of the feed hopper 16 constitute an inlet and an outlet, respectively, for a slurry containing particulate material, such as a pressurized tailings slurry.

At the top end of the hopper 16, the vertical walls 34, 35 are each provided with an outward facing flange 37 for connection to the feed pipe 17 and also to provide a pre-loading zone for applying a pre-load to the hopper 16 in a manner set forth further below.

At their bottom edges, the longer side walls 34 of the feed hopper 16 widen to form sealing wings 38 covering the dewatering rollers 5, 6 of the first pair, and the filter belts 11, 12 engaged with the dewatering rollers 5, 6, in at least parts of the aforementioned engagement zones 30. The sealing wings 38 of the feed hopper 16 each have the shape of a curved rectangle. The long sides of the rectangle forming the sealing wing 16 extend along the entire operational length of the dewatering roller 5, 6 so as to allow for a distribution of the pressurized slurry about the entire operational length. The short sides of the rectangle forming the sealing wing 38 extend along a circular arc having a center located on the longitudinal axis of the dewatering roller 5, 6 and a radius slightly larger than the radius of the dewatering roller 5, 6. In other words, in a cross sectional view, each sealing wing 38 extends along a circle which is concentric with the corresponding dewatering roller. In this manner, the curved shape of the sealing wings 38 is adapted to the shape of the curved outer peripheries of the dewatering rollers 5, 6.

In the embodiment, the sealing wings 38 extend from the bottom ends of the vertical long side walls 34 of the duct portion 31 in both circumferential directions of the dewatering roller:
In the direction towards the dewatering gap, first portions 38a of the sealing wings 38 are formed as continuations of the vertical long side walls 34 of the duct portion 31. The first portions 38a are curved so as to follow the curved shape of the dewatering rollers.

In the direction away from the dewatering gap, second portions 38b of the sealing wings 38 are equally curved so as to follow the curved shape of the dewatering rollers. To increase the dimensional stability of the feed hopper 16 including the sealing wings 38, smoothly curved transitions 40 are formed between the vertical long side walls 34 of the duct portion 31 and the second portions 38b of the sealing wings 38.

When the pressurized slurry is fed through the duct portion 31 of the feed hopper 16 and towards the dewatering gap between the dewatering rollers 5, 6, the pressure of the slurry acts upon the vertical side walls of the hopper. The corresponding forces acting onto the long side walls 34 is indicated by horizontal arrows in Figure 5. The forces are transferred to the sealing wings 38, thereby increasing the contact force between the sealing wings 38 of the feed hopper 31 and the filter belts 11, 12 moving into the gap in engagement with the dewatering rollers 5, 6, creating a seal. The contact force is distributed about the circular arc shaped length of the sealing wings 38 in the circumferential direction of the dewatering rollers. In this manner, the slurry pressure makes sure that a force in the radial direction of the dewatering rollers is applied to the sealing wings, which in turn makes the sealing wings follow the shape of the dewatering rollers.

The effect can be improved by pre-loading the hopper 16 vertically against the dewatering rollers 5, 6 and the filter belts 11, 12 carried thereon. The pre-loading force is illustrated by vertical arrows in Figure 5. It adds to the force resulting from the slurry pressure and provides for a close contact between the feed hopper, filter belts and dewatering rollers. The hopper 16 is supported to the frame, specifically to a horizontal bar thereof which also carries the feed pipe 17 (Figure 6), so that a corresponding pre-loading force can be applied to the hopper 16. Preferably, the pre-loading force can be adjusted if needed, e.g. to compensate for a certain wear of the ceramic elements. An adjustment mechanism such as a set screw could be provided for this purpose.

Also, each of the two short side walls of the feed hopper 16 (i.e. the two side walls which extend perpendicular to the dewatering gap) is provided with an indentation 42 to reduce the stiffness of a bottom portion of the side wall adjacent to the dewatering gap. The indentation 42 is provided approximately at the center of the bottom half of the side wall and forms a gap seal adapter 42. The indentation or gap seal adapter 42 provides a certain flexibility to the bottom part of the feed hopper 16 and thereby further promotes an adaptation of the shape of the feed hopper, particularly the sealing wings thereof, to the shape of the dewatering rollers during operation. The adapter 42 thereby adds to the sealing efficiency of the sealing wings.

In order to facilitate the sliding of the filter belts relative to the sealing wings of the feed hopper, the surfaces of the sealing wings facing the filter belts and dewatering rollers are clad with ceramic elements 43. The ceramic elements provide for a low friction and high wear resistance.

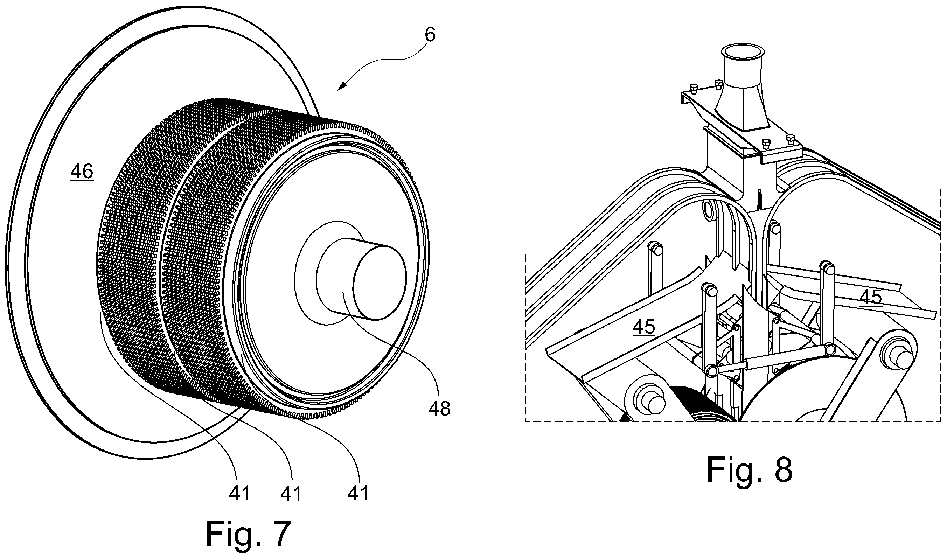

Immediately after leaving the sealing zones, i.e. the areas covered by the sealing wings, the endless filter belts get in contact with the slurry being fed via the feed hopper and move further into the dewatering gap where a dewatering pressure is exerted by the dewatering rollers upon the slurry sandwiched between the filter belts. The dewatering pressure displaces the water contained in the slurry through the filter cloth of the filter belts and towards the dewatering rollers. The dewatering rollers are in turn equipped with an arrangement of drainage grooves 44 on the outer peripheral surfaces thereof which take up the filtrate being displaced through the filter belts. The drainage grooves are shown in Figure 5 and also once again in Figure 7 which is an isolated view of one dewatering roller 6. In the embodiment, the grooves are provided essentially in the form of a grid of grooves 44 extending in the circumferential direction of the dewatering rollers 5, 6 and transverse thereto. The grooves 44 may also form other types of patterns as long as a suitable balance is maintained between those areas of the dewatering rollers 5, 6 which constitute contact areas with the filter belt, and the areas of the grooves 44 which constitute non-contact areas of the filter belt, to obtain a proper filtration result.

An area of possible gaps between inner surfaces of the sealing wings and the filter belts opposite thereto is significantly smaller than an effective area of the filter belt and the drainage grooves in the dewatering rollers. This promotes the travelling of the filtrate through the filter belt also in the areas of the sealing wings and results in a sufficient dewatering of the slurry in these areas, thereby reducing or completely avoiding the risk that any slurry leaks to the outside which gets between the sealing wings and the filter belts under pressurized conditions.

From the drainage grooves 44, the filtrate flows towards inclined collection trays 45 disposed underneath each of the dewatering rollers. The water from collection trays of vertically adjacent dewatering rollers is collected in vertical discharge chutes 39 arranged to both sides of the assembly. While the water flows by gravity along the dewatering grooves, collection trays and/or discharge chutes, the dewatering rollers could be provided with a water suction device if needed in order to promote the flow along the dewatering grooves, and/or a vacuum suction could be associated with the collection trays to promote the flow towards the discharge chutes.

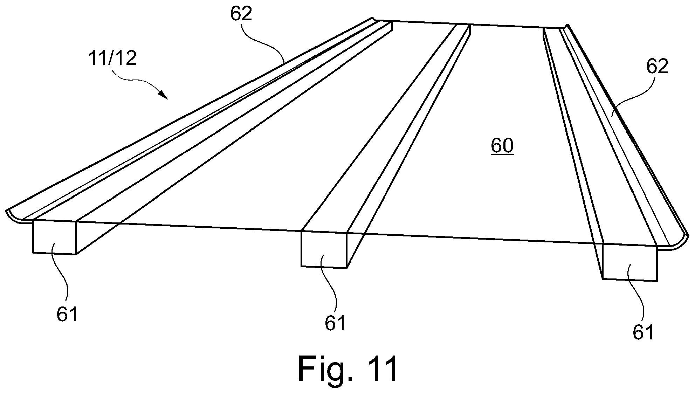

Figure 8 illustrates the collection trays 45 associated with the first pair of dewatering rollers wherein, however, the dewatering rollers as such are omitted in the illustration so that the interface between the collection trays and the filter belts 11, 12 becomes visible: in order to allow for the filtrate having passed the filter belt to flow onto the collection tray, the collection tray is in close sliding contact with the filter belt. In the embodiment, an edge of the collection tray adjacent the filter belt has a shape which is adapted to the shape of the filter belt (in a manner described further below with reference to Figure 11).

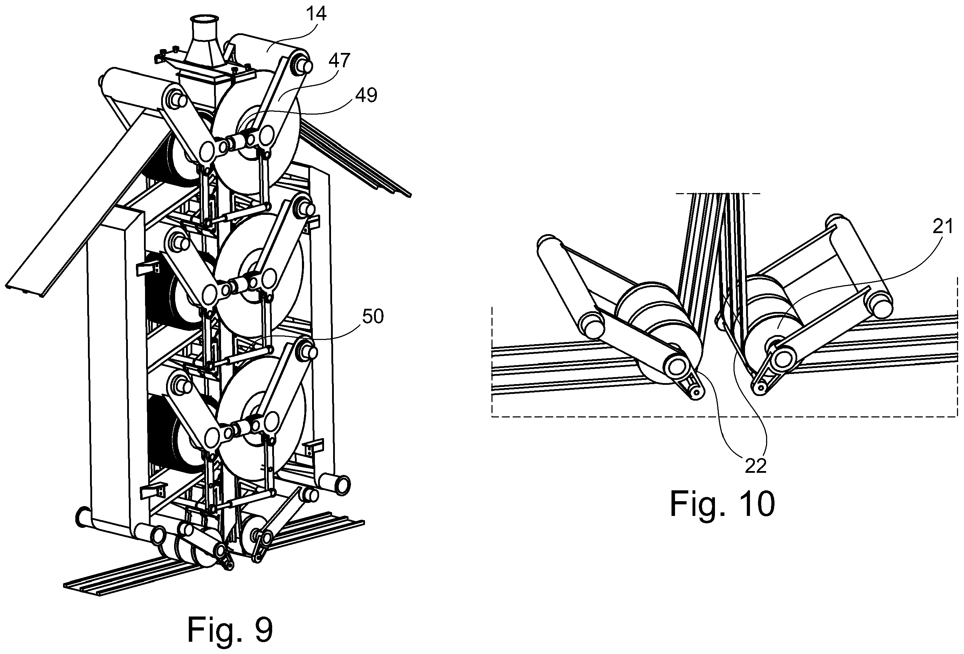

As shown in Figures 1a, 1b and 2 as well as the open frame illustration in Figure 9, at least one dewatering roller 5, 6 may be provided with a disk-shaped flange 46 at a front face thereof. More specifically, in each pair of dewatering rollers 5, 6, one of the rollers may have flanges 46 on both its opposite front faces as shown in the Figures, or one of the rollers may have a flange 46 on one of its front faces while the other roller of the pair has a flange 46 on its opposite front face. In any case, the flanges 46 have a diameter exceeding a diameter of the curved outer peripheral surfaces of the dewatering rollers and thereby seal the dewatering gap towards the front and/or rear of the assembly. Preferably the diameter of the flange 46 should be sufficiently large to bridge the gap to the second roller of the pair, as it is also the case in the illustrated embodiments. Provided that such a flange 46 is provided to one or both of the dewatering rollers of the first pair adjacent to the feed hopper 16, the flange 46 may also seal the feed hopper 16 towards the front and/or rear of the assembly.

Figure 9 also provides further details as to the structural arrangement and support of the dewatering rollers in the assembly. In Figure 9, the illustration of a part of the frame structure (see Figure 3) has been omitted so as to provide an unimpeded view of the internal structures:
Each dewatering roller is supported to the frame of the assembly by a U-shaped carrier structure as mentioned above with reference to Figure 3. Each U-shaped carrier structure includes a tube 14 which is hingedly or rotatably supported between two of the vertical posts 3 of the frame 2, as well as two linking arms 47, each linking arm extending from one axial end of the tube 14 to one of two stud axles 48 of the dewatering roller (see also Figure 7). This hinged support of the dewatering rollers evens out load tension and distributes uneven forces.

Specifically, if the slurry in the dewatering gap creates an uneven load which tends to result in a skewing of the axis of a dewatering roller and a corresponding deflection one of the two linking arms 47 associated therewith, the tube 14 linking the two linking arms 47 will withdraw the linking arm 47 at the other side to the same extent, thereby cancelling any skewing of the dewatering roller. The tube 14 thereby acts as a load deflector.

At both sides of the dewatering rollers in the axial direction thereof, the stud axles 48 of the dewatering rollers of each pair are supported relative to each other by means of pistons 49 which are hydraulically operated in this embodiment but could as well be pneumatically or mechanically operated. The pistons 49 define the distance between the stud axles 48 and thereby also the distance between the outer peripheries of the dewatering rollers in the area of the dewatering gap.

The two pistons 49 associated with a specific pair of dewatering rollers 5, 6 are interdependent for maximum dewatering efficacy. The pistons 49 associated with different pairs of dewatering rollers are controlled separately, though, hence different pressures can be applied to the individual pistons 49.

The internal distance between the pivot points for the holders of the dewatering rollers and a distance between the center axes of the dewatering rollers, in a mainly horizontal direction, have a large impact on the force required in the pistons 49 pressing the dewatering rollers towards each other. By adapting that relationship, it is possible to utilize the gravity force as a contributor to create pressing force on the slurry.

Separate pistons 50, equally operated hydraulically or otherwise, are provided to independently pressurize the belt support structures in the low pressure areas in between the roller pairs.

Cleaning devices can be associated with the discharge rollers 21. Figure 9 as well as the detailed view of Figure 10 show scraper blades 22 for separating the dewatered matter, i.e. the filter cake, from the filter belts for discharge.

Finally, the structure and configuration of the endless filter belts 11, 12 will be further described with reference to Figure 11.

As stated further above, the filter belts are made from webs 60 of filter cloth. Single ply or multiply material could be used for the cloth as it is known *per se.* The endless filter belts each further comprise at least one drive and sealing segment 61 extending in the travelling direction thereof, and the associated dewatering rollers each comprise a circumferential recess 41 (Figure 7) for engaging with the drive and sealing segment in the respective engagement zone.

In the embodiment, the filter belts have three such drive and sealing segments each, as illustrated in Figure 11. The drive and sealing segments 61 could e.g. be made from cord reinforced rubber, PU or other plastic material. The areas of the web 60 between the individual drive and sealing segments 61 allow filtrate to pass through and therefore together constitute the effective area of the filter belt.

Also, the endless filter belts each comprise flanged seals 62, e.g. equally made from rubber, PU or the like, at the longitudinal edges thereof which are shaped to seal against the sealing wings of the feed hopper.

As described further above with reference to Figure 8, not only the dewatering rollers but also the collection trays are adapted in shape to the configuration of the filter belts: Figure 8 shows that the edge of the collection tray which is in sliding contact with the filter belt has recesses for the filter belt's three drive and sealing segments to pass through.

Various modifications are possible within the scope of the invention as defined by the appended claims. Specifically, in one variant, at least one of the dewatering rollers may comprise a resilient, elastically deformable tire which has the ability to be compressed and to regain its shape. Such tires could be made from rubber, PU or other suitable materials. The dewatering grooves would be formed in the outer peripheral surface of the tire. The tire could be filled with gas, gel, foam etc., and means could be provided to adjust and control the pressure within the tire. The use of such resilient tires will result in an extended dewatering area between the rollers.

## Claims

1. A dewatering assembly (1) comprising:
a frame (2),
a pair of dewatering rollers (5, 6) rotatably supported by the frame (2) with their curved outer peripheral surfaces facing each other so as to form a dewatering gap there between,
an endless filter belt (11, 12) arranged to travel through the dewatering gap in a substantially vertical direction upon rotation of the dewatering rollers (5, 6), wherein the endless filter belt (11, 12) forms an engagement zone (30) with one of the dewatering rollers (5, 6) in which successive portions of the endless filter belt (11, 12) engage with and disengage from successive portions of the curved outer peripheral surface of the dewatering roller, and
a feed hopper (16) arranged above the dewatering gap for feeding a slurry into the dewatering gap,
wherein the feed hopper (16) comprises a sealing wing (38) covering the one of the dewatering rollers (5, 6), and the filter belt (11, 12) engaged therewith, in at least a part of the engagement zone (30).

2. The dewatering assembly (1) of claim 1, comprising a pair of endless filter belts (11, 12) arranged to travel through the dewatering gap in a substantially vertical direction upon rotation of the dewatering rollers (5, 6),
wherein each endless filter belt (11, 12) forms an engagement zone (30) with one of the dewatering rollers (5, 6) in which successive portions of the endless filter belt (11, 12) engage with and disengage from successive portions of the curved outer peripheral surface of the dewatering roller,
wherein the feed hopper (16) is arranged above the dewatering gap for feeding the slurry into the dewatering gap and between the filter belts (11, 12), and
wherein the feed hopper (16) comprises sealing wings (38) covering the dewatering rollers (5, 6), and the filter belts (11, 12) engaged therewith, in at least parts of the engagement zones.

3. The dewatering assembly (1) of claim 1 or 2, in which the or each sealing wing (38) of the feed hopper (16) has a curved shape corresponding to the shape of the curved outer periphery of the associated dewatering roller (5, 6).

4. The dewatering assembly (1) of anyone of the preceding claims, in which a surface of the or each sealing wing (38) facing the associated dewatering roller (5, 6) is clad with hard-wearing elements, e.g. ceramic elements.

5. The dewatering assembly (1) of anyone of the preceding claims, further comprising means for preloading the feed hopper (16) against the dewatering rollers (5, 6).

6. The dewatering assembly (1) of anyone of the preceding claims, further comprising a feed pipe (17) upstream of the feed hopper (16) to supply the slurry to the feed hopper (16).

7. The dewatering assembly (1) of anyone of the preceding claims, in which the stiffness of at least one side wall of the feed hopper (16) is reduced in a bottom portion of the side wall adjacent to the dewatering gap.

8. The dewatering assembly (1) of anyone of the preceding claims, in which drainage grooves (44) are formed in the curved outer peripheral surface of at least one of the dewatering rollers (5, 6).

9. The dewatering assembly (1) of claim 8, in which the drainage grooves (44) extend across the curved outer peripheral surface of the dewatering roller in a grid pattern.

10. The dewatering assembly (1) of claim 8 or 9, in which an area of possible gaps between opposing surfaces of the sealing wing (38) and the filter belt (11, 12) is smaller than an effective area of the filter belt (11, 12) and the drainage grooves (44) in the dewatering roller.

11. The dewatering assembly (1) of any of the preceding claims, wherein at least one of the dewatering rollers comprises a resilient, elastically deformable tire which has the ability to be compressed and to regain its shape.

12. The dewatering assembly (1) of anyone of the preceding claims, in which a disk-shaped flange (46) is provided to at least one the front faces of at least one of the dewatering rollers (5, 6), the flange (46) having a diameter exceeding a diameter of the curved outer peripheral surface of the one of the dewatering rollers (5, 6).

13. The dewatering assembly (1) of anyone of the preceding claims, further comprising at least one further pair of dewatering rollers (7, 8; 9, 10) disposed below the first pair of dewatering rollers (5, 6),
wherein the further dewatering rollers (7, 8; 9, 10) are also rotatably supported with their curved outer peripheral surfaces facing each other so as to form a further dewatering gap there between, and
wherein the endless filter belt(s) (11, 12) is/are arranged to travel also through the further dewatering gap in a substantially vertical direction.

14. The dewatering assembly (1) of claim 13, wherein the dewatering rollers (5 - 10) of one pair of dewatering rollers are larger in diameter than the dewatering rollers of at least one further pair of dewatering rollers arranged downstream in the travelling direction of the filter belt(s) (11, 12) through the assembly.

15. The dewatering assembly (1) of claim 13 or 14, wherein the dewatering gap formed by one pair of dewatering rollers (5 - 10) is larger than the dewatering gap formed by at least one further pair of dewatering rollers arranged downstream in the travelling direction of the filter belt(s) (11, 12) through the assembly.

16. The dewatering assembly (1) of any one of claims 13 to 15, further comprising means (18) for supporting the endless filter belt(s) (11, 12) in an area between one pair of dewatering rollers and a further pair of dewatering rollers arranged downstream in the travelling direction of the filter belt(s) (11, 12) through the assembly.

17. The dewatering assembly (1) of anyone of the preceding claims, in which at least one dewatering roller (5 - 10) is supported by a carrier structure (14, 37) which is in turn hingedly or pivotably supported to the frame (2).

18. The dewatering assembly (1) of anyone of the preceding claims, in which means (49) are provided to support the dewatering rollers (5 - 10) of at least one of the pairs of dewatering rollers relative to each other.

19. The dewatering assembly (1) of anyone of the preceding claims, in which the or each endless filter belt (11, 12) comprises a web (60) of filter cloth in the shape of a belt comprising two longitudinal edges and two surfaces facing away from each other, and a flanged seal (62) at one or both of the longitudinal edges of the web (60) which is shaped to seal against the sealing wing (38) of the feed hopper (16).

20. The dewatering assembly (1) of anyone of the preceding claims, in which the or each endless filter belt (11, 12) comprises at least one drive and sealing segment (61) extending on one surface of the web (60) of filter cloth in a longitudinal direction thereof, and the associated dewatering roller (5 - 10) comprises a circumferential recess (61) for engaging with the drive and sealing segment in the respective engagement zone (30).

21. The dewatering assembly (1) of anyone of the preceding claims, further comprising a filter water collection tray (45) below at least one dewatering roller, preferably below each dewatering roller (5 - 10), wherein the water from filter water collection trays (45) of at least two dewatering rollers is optionally discharged via a common dewatering chute (39).

22. The dewatering assembly (1) of anyone of the preceding claims, further comprising means for providing a pressurized slurry to the feed hopper (16).

23. A filter belt (11, 12) for use as an endless filter belt in a dewatering assembly (1) of anyone of the preceding claims,
the filter belt (11, 12) comprising a web (60) of filter cloth in the shape of a belt comprising two longitudinal edges and two surfaces facing away from each other,
the filter belt (11, 12) further comprising a flanged seal (62) at one or both of the longitudinal edges thereof which are shaped to seal against the sealing wing (38) of the feed hopper (16) of the dewatering assembly (1).

24. The filter belt (11, 12) of claim 23, further comprising at least one drive and sealing segment (61) extending on one surface of the web (60) of filter cloth in a longitudinal direction thereof and configured for engagement with a circumferential recess (61) in the associated dewatering roller (5 - 10) in the respective engagement zone (30).
